# EUROPÄISCHE PATENTANMELDUNG

(11) **EP 2 144 427 A1**
(43) Veröffentlichungstag der Anmeldung: **13.01.2010**
(21) Anmeldenummer: 06123689.9
(22) Anmeldetag: 08.11.2006
(51) Int. Cl.: H04M 1/725

(54) **Verfahren zum Übertragen von Signalen und Kommunikationsendgerät dafür**

(30) Priorität: 08.11.2005 DE 102005053253
(71) Anmelder: Palm, Inc., Sunnyvale, CA 94085-2801 (US)
(72) Erfinder: Guitarte Perez, Jesus Fernando, 81739 München (DE); Lucas, Carlos, 50006 Zaragoza (ES); Lukas, Klaus, 81379 München (DE)
(74) Vertreter: Samson & Partner

(57) **Zusammenfassung**

Offenbart ist ein Verfahren zum Übertragen von Signalen mittels eines Kommunikationsendgeräts. Dabei wird ein Sprachsignal durch ein Mikrofon des Kommunikationsendgeräts erfasst (S30). Es wird ferner ein Musiksignal in dem Kommunikationsendgerät bereitgestellt (S35). Anschließend wird das Sprachsignal und das Musiksignal in dem Kommunikationsendgerät gemischt (S40), um ein kombiniertes Signal zu erhalten. Das kombinierte Signal wird dann codiert (S50), um ein codiertes Signal zu erhalten, das schließlich an einen Empfänger übertragen wird (S60). Auf diese Weise kann der Benutzer des Kommunikationsendgeräts kostengünstig den Empfänger an seiner insbesondere bevorzugten Musik kostengünstig teilhaben lassen.

## Beschreibung

Die vorliegende Erfindung betrifft ein Verfahren zum Übertragen von Signalen, insbesondere Sprachsignalen, denen von einer Person bzw. einem Benutzer preferierte Musiksignale beigemischt werden können.

Kommunikationsgeräte, wie beispielsweise Mobiltelefone, dienen heutzutage nicht mehr nur zum Telefonieren, sondern sind auf Grund der Miniaturisierung elektronischer Komponenten mit einer Vielzahl weiterer technischer Anwendungen ausgestattet. Insbesondere verfügen die modernen Kommunikationsgeräte über die Möglichkeiten, multimediale Inhalte (wie Bild-, Video-, Ton-Inhalte, usw.) aufzuzeichnen, wiederzugeben oder an andere Kommunikationsendgeräte zu übertragen.

Im Zuge dieser Multimedia-Fähigkeiten moderner Kommunikationsendgeräte wächst die Bedeutung von Diensten, die es ermöglichen, multimediale Inhalte (an andere Kommunikationsendgeräte bzw. andere Benutzer) zu verteilen. Vor allem die Verteilung von Musik spielt im Bereich von Multimedia eine besondere Rolle. Eine gängige herkömmliche Methode zum Verteilen von multimedialen Objekten besteht dabei in der Übertragung dieser Objekte mittels des MMS(MMS: Multimedia Messaging Service)-Dienstes, den zumindest sehr viele moderne Kommunikationsendgeräte unterstützen. Dieses Verfahren der Verteilung von Musik hat jedoch den Nachteil, dass es sehr kostspielig für den Sender der multimedialen Inhalte bzw. Musik werden kann.

Eine weitere Möglichkeit der Verteilung von Musik besteht in einem neuen Dienst von Netzbetreibern, an Stelle des standardmäßigen Piep-Tons während dem Verbindungsaufbau eines Telefongesprächs eine bestimmte von dem Rufempfänger ausgewählte Musik bzw. ein ausgewähltes Musikstück dem Anrufer vorzuspielen. Jedoch besteht hier der Nachteil darin, dass die vom Benutzer auszuwählenden Musikstücke vom Netzbetreiber vorgegeben sind und der Benutzer somit nur eine eingeschränkte Möglichkeit zum Auswählen seines persönlichen "Ring-Back-Tons" hat.

Somit besteht die Aufgabe der vorliegenden Erfindung darin, dem Benutzer eine kostengünstige Möglichkeit zu verschaffen, beliebige Musik an andere Benutzer zu verteilen.

Diese Aufgabe wird durch die unabhängigen Ansprüche gelöst. Vorteilhafte Ausgestaltungen sind Gegenstand der Unteransprüche.

Dabei umfasst ein Verfahren zum Übertragen von Daten bzw. Signalen folgende Schritte. Es wird ein Sprachsignal (beispielsweise umfassend ein oder mehrere Wörter einer Person) mittels eines Mikrofons eines Kommunikationsendgeräts erfasst. Ferner wird in dem Kommunikationsendgerät ein Musiksignal (beispielsweise umfassend ein bestimmtes Lied oder sonstige Folge von Tönen oder Geräuschen) in dem Kommunikationsendgerät bereitgestellt. Anschließend wird das erfasste Sprachsignal mit dem Musiksignal in dem Kommunikationsendgerät gemischt, um ein kombiniertes Signal zu erhalten. Das kombinierte Signal wird dann (von einer entsprechenden Codiereinrichtung) einer Codierung unterzogen, um ein codiertes Signal zu erhalten. Dieses codierte Signal wird schließlich von dem Kommunikationsendgerät an einen Empfänger (über eine entsprechende Kommunikationsverbindung) übertragen. Auf diese Weise wird eine Möglichkeit zur kostenminimierten Verteilung bzw. Übertragung von Musik bereitgestellt. Außerdem ist es möglich, dass ein Benutzer des Kommunikationsendgeräts die durch das Musiksignal repräsentierte Musik bzw. das repräsentierte Musikstück frei wählen kann und nicht beispielsweise auf ein vordefiniertes Angebot eines Netzbetreibers beschränkt ist. Ferner wird durch das Verfahren gewährleistet, dass ein Empfänger das Musiksignal bzw. die dadurch repräsentierte Musik quasi "online" (mit Übertragung von Sprachsignalen) übertragen bekommt und somit nicht "offline", d. h. vor oder nach einem Gespräch die bereitgestellte Musik in aufwändiger Weise suchen und wiedergeben muss.

Gemäß einer vorteilhaften Ausgestaltung, insbesondere bei der Verwendung des Verfahrens im Rahmen eines Telefongesprächs bzw. einer Telefonverbindung, kann vor dem Erfassen des Sprachsignals eine Kommunikationsverbindung (beispielsweise Telefonverbindung) von dem Kommunikationsendgerät zu dem Empfänger aufgebaut werden. Nach Aufbau der Verbindung werden dann, wie oben erwähnt, Sprachsignale erfasst und mit Musiksignalen gemischt, codiert und an den Empfänger übermittelt.

Gemäß einer weiteren vorteilhaften Ausgestaltung wird das Musiksignal durch Wiedergeben einer Datei bereitgestellt, die eine Information bezüglich des Musiksignals enthält. Vorteilhafter Weise wird die Information der Datei vor dem Wiedergeben decodiert, um daraus das Musiksignal zu erhalten. Es ist dabei möglich, dass die Datei bzw. die in der Datei enthaltene Information nach einem gängigen Musikformat codiert ist. Ein derartiges Musikformat kann sein MP3 (für MPEG1 Audio Layer 3 aus dem Motion Picture Expert Group (MPEG)-Standard), AAC (Advanced Audio Coding), OGG (Vorbis), WMA, RA, MP3PRO oder WAV.

Gemäß einer vorteilhaften Ausgestaltung legt ein Benutzer des Kommunikationsendgeräts vor dem Aufbauen einer Kommunikationsverbindung mit dem Empfänger bzw. vor Erfassen von Sprachsignalen das Musiksignal fest, das zum Sprachsignal oder den Sprachsignalen gemischt werden soll. Wie bereits erwähnt, kann dabei das Musiksignal ein Lied umfassen, so dass der Benutzer beispielsweise vor dem Aufbauen einer Kommunikationsverbindung oder vor dem Erfassen eines Sprachsignals die Datei eines entsprechenden Lieds, das wiedergegeben werden soll, auswählt. Die Auswahl kann dabei beispielsweise durch Drücken einer entsprechenden Taste des Kommunikationsendgeräts oder über eine Menüstruktur auf einer Benutzeroberfläche des Kommunikationsendgeräts erfolgen. Dabei kann oder können die eine oder mehreren Dateien mit der Information bzgl. des Musiksignals in einem nichtflüchtigen Speicher des Kommunikationsendgeräts vorgesehen sein. Es ist jedoch auch möglich, dass die eine oder mehreren Dateien auf einem austauschbaren nichtflüchtigen Speicher bzw. einem Wechseldatenträger (SD-Speicherkarte, Multimedia-Speicherkarte,...) vorgesehen sind, und über eine entsprechende Schnittstelle dem Kommunikationsendgerät zur Wiedergabe bereitgestellt werden.

Gemäß einer weiteren vorteilhaften Ausgestaltung findet das Codieren des kombinierten Signals durch eine Codiereinrichtung umfassend einen Sprachcodierer (Sprach-Encoder) statt, der insbesondere nach dem AMR-NB-Format (Adaptive Multi Rate-Narrow Band Format) arbeitet. Es ist jedoch auch möglich andere für die Sprachkommunikation gebräuchliche Codierer (Encoder) zu verwenden, wie beispielsweise einen Sprachcodierer nach dem AMR-WB(Adaptive Multi-Rate Wideband Codec)-Format, der einen besseren Benutzerkomfort (insbesondere eine bessere Klangqualität) bietet. Insbesondere für Kommunikationsverbindungen mit einer hohen bzw. höheren Bandbreite im Bereich von Kilobits pro Sekunde, können auch Codierer wie beispielsweise nach dem AAC- oder MP3-Format verwendet werden (um in diesem Fall auch Stereo-Musik zu übertragen).

Gemäß einer weiteren vorteilhaften Ausgestaltung wird zusätzlich zu dem Sprachsignal oder an Stelle des Sprachsignals ein Videosignal erfasst. Dieses Videosignal kann dann entweder zusammen mit dem Sprachsignal oder alleine mit dem Musiksignal zu dem kombinierten Signal gemischt werden. Entsprechend wird dieses kombinierte Signal dann vor der Übertragung an einen Empfänger codiert. Das kombinierte Signal kann dann je nach Art der Kombination, ob Sprach-Musik-Signal, Video-Musik-Signal oder Sprach-Video-Musik-Signal mittels eines Sprachcodierers (wie bereits erwähnt) oder mittels eines kombinierten Audio/Video-Codierers codiert werden, um das codierte Signal zu erhalten. Im letzteren Fall kann dabei eine Codierung gemäß dem MPEG-Standard, insbesondere gemäß dem MPEG4-, H.263- oder H.264-Standard für Video, und gemäß einem der AMR-,AAC-,AAC+-,eAAC+ -Standards für Audio (welche in der mobilen Kommunikation verwendet werden) erfolgen.

Die Übertragung des codierten Signals zu dem Empfänger kann über eine drahtgebundene oder drahtlose Verbindung geschehen. Es ist auch ein kombinierter Übertragungsweg von drahtloser und drahtgebundener Übertragung denkbar. Dabei kann eine drahtgebundene Übertragung beispielsweise über ein Telefonnetz bzw. Festtelefonnetz durchgeführt werden, wobei im drahtgebundenen Fall auch die Übertragung über ein anderes Netz, wie das Internet (beispielsweise mittels Voice-over-IP) denkbar ist. Eine drahtlose Übertragung kann beispielsweise über eine Funkverbindung realisiert werden. Insbesondere ist eine drahtlose Verbindung in Form einer Mobilfunkverbindung denkbar, die beispielsweise gemäß dem GSM(Global System for Mobile Communications)- oder UMTS(Universal Mobile Telecommunications System)-Standard arbeitet.

Ist das codierte Signal bei dem Empfänger angekommen, so wird es dort von einer entsprechenden Decodiereinrichtung (die Decodiereinrichtung muss dabei mit der Codiereinrichtung, die zuvor das codierte Signal auf Senderseite erzeugt hat, kompatibel sein bzw. den selben Codec verwenden) decodiert und wiedergegeben. Das heißt, der Empfänger hört sowohl das erfasste Sprachsignal sowie das beigemischte Musiksignal des sendenden Kommunikationsendgeräts. Es sei diesbezüglich bemerkt, dass insbesondere bei Verwendung des beschriebenen Verfahrens im Rahmen einer Telefon-Kommunikationsverbindung nicht nur ein Kommunikationsgerät, sondern alle an der Telefon-Kommunikationsverbindung beteiligten Kommunikationsendgeräte in der Lage sein können, gemäß oben beschriebenen Verfahren Sprachsignale und Musiksignale (und ggf. Videosignale) zu mischen und codiert an die jeweiligen anderen Kommunikationsendgeräte zu übertragen, so dass jedes Kommunikationsendgerät bzw. jeder zugeordnete Benutzer seine bevorzugte Musik an seine(n) Kommunikationspartner weitergeben kann.

Gemäß einem weiteren Aspekt der Erfindung wird ein Kommunikationsendgerät geschaffen, das insbesondere zum Durchführen eines oben beschriebenen Verfahrens bzw. der Ausgestaltungen hiervon eingerichtet ist. Das Kommunikationsendgerät hat dabei ein Mikrofon zum Erfassen eines Sprachsignals. Es hat ferner eine Musikerzeugungseinrichtung zum Erzeugen eines Musiksignals. Ferner hat es einen Mischer zum Mischen des Sprachsignals und des Musiksignals, um ein kombiniertes Signal zu erhalten. Das kombinierte Signal wird dann in einem Codierer des Kommunikationsendgeräts codiert, um ein codiertes Signal zu erhalten. Dieses codierte Signal wird dann mittels einer Kommunikationseinrichtung des Kommunikationsendgeräts an einen Empfänger übertragen. Dieses Kommunikationsendgerät erlaubt somit eine kostengünstige und an den Benutzer des Kommunikationsendgeräts angepasste bzw. personalisierte Weiterleitung, insbesondere der von dem Benutzer preferierten Musik.

Gemäß einer vorteilhaften Ausgestaltung hat das Kommunikationsendgerät eine Steuereinrichtung, durch die vor dem Erfassen des Sprachsignals das Aufbauen einer Kommunikationsverbindung zu dem Empfänger veranlasst wird. Die Steuereinrichtung kann dabei mit der Kommunikationseinrichtung verbunden sein, um den Aufbau der Kommunikationsverbindung beziehungsweise das anschließende Durchführen der Kommunikationsverbindung oder Sprachverbindung zu koordinieren. Beispielsweise kann durch Drücken einer Taste einer Tastatur durch einen Benutzer die Steuereinrichtung zum Aufbauen der Kommunikationsverbindung veranlasst werden.

Gemäß einer weiteren vorteilhaften Ausgestaltung umfasst die Musikerzeugungseinrichtung eine Wiedergabeeinrichtung zum Wiedergeben einer Datei, die eine Information bezüglich des Musiksignals enthält. Die Wiedergabeeinrichtung kann dabei insbesondere eine Wiedergabe-Software aufweisen, die in der Lage ist, die Information der Datei zu decodieren, um das Musiksignal zu erhalten. Die Datei oder auch mehrere der Dateien, mit einer Information bezüglich eines Musiksignals können dabei in einer Speichereinrichtung des Kommunikationsendgeräts vorgesehen sein. Dabei kann die Speichereinrichtung ein nichtflüchtiger Speicher im Kommunikationsendgerät sein, oder sie kann als austauschbarer Speicher (beispielsweise SD-Karte) mit dem Kommunikationsendgerät lösbar verbunden sein. Die Datei bzw. Dateien, welche wiedergegeben werden sollen, um das Musiksignal zu erhalten, können beispielsweise nach dem MP3-, MP3PRO-, AAC-, OGG-, RA-, WMA- oder WAV-Format codiert sein.

Gemäß einer weiteren vorteilhaften Ausgestaltung umfasst das Kommunikationsendgerät eine Auswahleinrichtung, mittels der ein bestimmtes Lied auswählbar ist, dessen Musiksignal von der Musikerzeugungseinrichtung zu erzeugen bzw. bereitzustellen ist. Die Auswahleinrichtung kann dabei durch eine Tastatur bzw. eine spezielle Taste von dieser realisiert sein. Sie kann aber auch beispielsweise durch eine Menüstruktur realisiert sein, die auf einer Anzeige des Kommunikationsendgeräts dargestellt wird und über spezielle Tasten oder im Falle einer berührungssensitiven Anzeige über die Anzeigeeinrichtung (durch Berühren bestimmter Anzeigebereiche) ansteuerbar bzw. bedienbar ist.

Der Codierer des Kommunikationsendgeräts kann als Sprachcodierer, insbesondere als AMR NB-Codierer ausgebildet sein.

Gemäß einer weiteren vorteilhaften Ausgestaltung umfasst das Kommunikationsendgerät eine Kamera zum Erfassen eines Videosignals, das der Mischer mit dem Musiksignal und Sprachsignal zu dem kombinierten Signal zusammenmischt. Es ist auch möglich, dass die Kamera an Stelle des Mikrofons am Kommunikationsendgerät vorgesehen ist, so dass der Mischer in diesem Fall das Videosignal mit dem Musiksignal zusammenmischt, um das kombinierte Signal zu erhalten. Während, wie oben bereits erwähnt, im Fall eines reinen Audiosignals (Sprach-MusikSignals) ein Sprachcodierer als Codierer zu verwenden ist, ist bei Verwendung von Videosignalen in dem kombinierten Signal ebenso ein Video-Codierer in dem Codierer vorzusehen, der insbesondere gemäß dem MPEG-Standard (beispielsweise MPEG1-, MPEG2- oder MPEG4-Standard) arbeitet.

Gemäß einer weiteren vorteilhaften Ausgestaltung ist die Kommunikationseinrichtung dafür eingerichtet, das codierte Signal über eine drahtgebundene und/oder drahtlose Verbindung zu dem Empfänger zu übertragen. Dabei kann im Falle einer drahtgebundenen Kommunikationsverbindung die Kommunikationseinrichtung eine Schnittstelle zum Verbindung mit einem Kommunikationsnetz, wie ein Telefonnetz oder anderem Netz (Internet) aufweisen. Im Falle einer drahtlosen Verbindung, die insbesondere über eine Funkverbindung erreicht wird, kann die Kommunikationseinrichtung ein Funkmodul oder vorteilhafter Weise ein Mobilfunkmodul zum Aufbauen einer Mobilfunkverbindung aufweisen, die insbesondere gemäß dem GSM- oder UMTS-Standard ausgebildet ist.

Das Kommunikationsendgerät kann als ein drahtgebundenes Telefon, ein Mobilfunkgerät, ein Mobiltelefon, aber auch als ein tragbarer Computer mit einem Kommunikationsmodul, insbesondere Funkmodul ausgebildet sein.

Bevorzugte Ausführungsformen der vorliegenden Erfindung werden nachfolgend Bezug nehmend auf die beiliegenden Zeichnungen näher erläutert. Es zeigen:
- Figur 1: eine Telekommunikationsanordnung zum Durchführen eines Verfahrens zum Übertragen von Signalen bzw. Daten von einem ersten Kommunikationsendgerät zu einem zweiten Kommunikationsendgerät gemäß einer beispielhaften Ausführungsform der Erfindung;
- Figur 2: einen schematischen Ablauf zum Veranschaulichen des Verfahrens zum Übertragen von Signalen vom dem ersten Kommunikationsendgerät zu dem zweiten Kommunikationsendgerät gemäß einer beispielhaften Ausführungsform der Erfindung;
- Figur 3: eine schematische Darstellung der wesentlichen Schritte auf Seiten des Senders in grafisch aufbereiteter Form des Verfahrens von Figur 2; und
- Figur 4: eine schematische Darstellung der wesentlichen Schritte auf Seiten des Empfängers gemäß dem Verfahren von Figur 2.

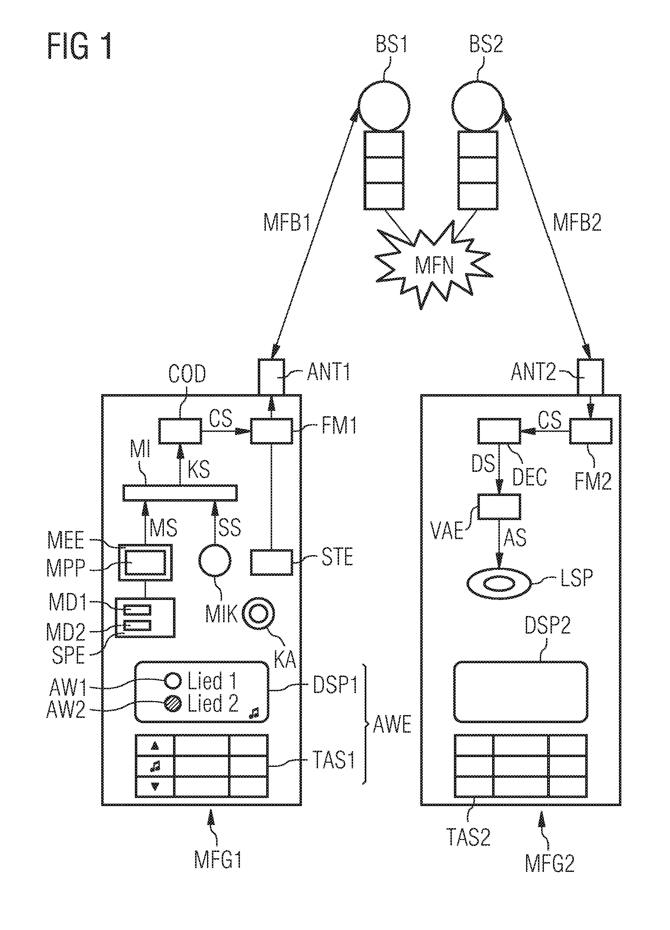

Es sei zunächst auf Figur 1 verwiesen, in der eine Telekommunikationsanordnung zum Übertragen von Daten bzw. Signalen gezeigt ist.

In der Figur oben ist dabei eine erste Basisstation BS1 gezeigt, die als ein Teil eines Mobilfunknetzes MFN in der Lage ist, Daten bzw. Signale über eine (bidirektionale) Mobilfunkverbindung MFB1 mit einem ersten Kommunikationsendgerät in der Form eines Mobiltelefons MFG1 auszutauschen. Entsprechend ist eine zweite Basisstation BS2 gezeigt, die ebenso als Teil des Mobilfunknetzes MFN in der Lage ist, Daten bzw. Signale über eine (bidirektionale) Mobilfunkverbindung MFB2 mit einem zweiten Kommunikationsendgerät in der Form eines Mobiltelefons MFG2 auszutauschen. Genauer gesagt werden die von der Basisstation BS1 abgestrahlten Signale von einer Antenne ANT1 des Mobiltelefons MFG empfangen und einem Mobilfunkmodul FM1 zugeleitet. Ferner werden Signale bzw. Daten wie Sprachdaten oder Steuerdaten vom Mobilfunkmodul FM1 erzeugt und über die Antenne ANT1 zu der Basisstation BS1 gesendet. Entsprechend werden die von der Basisstation BS2 abgestrahlten Signale von einer Antenne ANT2 des Mobiltelefons MFG2 empfangen und einem Mobilfunkmodul FM2 zugeleitet. Überdies werden Signale bzw. Daten, wie Sprachdaten oder Steuerdaten, vom Mobilfunkmodul FM2 erzeugt und über die Antenne ANT2 zu der Basisstation BS2 gesendet. Dabei kann das Mobilfunknetz MFN (einschließlich der Basisstationen BS1 und BS2) sowie das Mobilfunkmodul FM1 des Mobiltelefons MFG1 und das Funkmodul FM2 des Mobiltelefons MFG2 gemäß dem GSM- oder UMTS-Standard arbeiten.

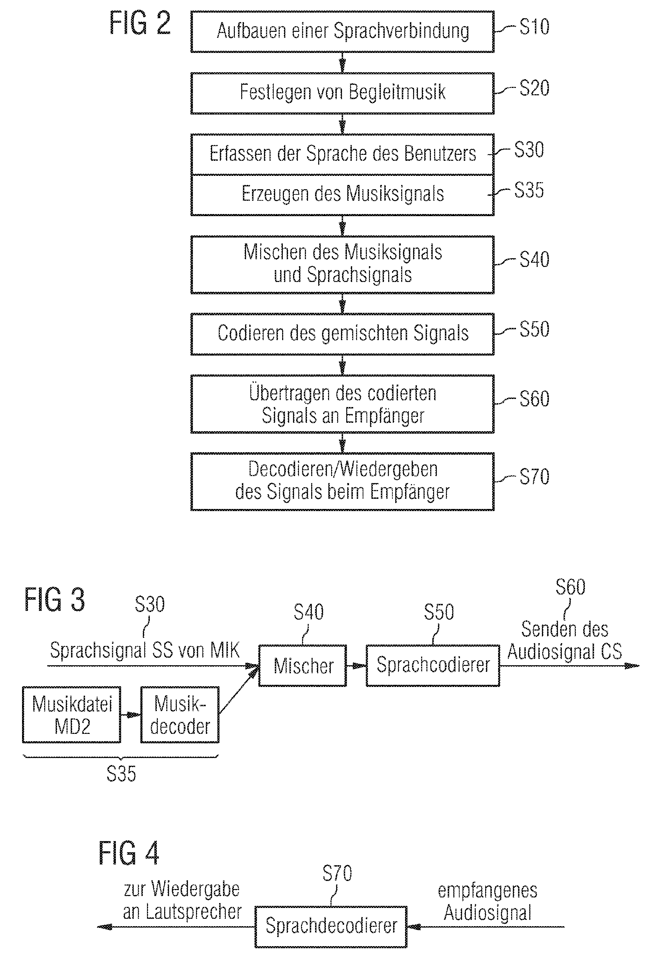

Zur Vorbereitung auf die Erläuterung des Ablaufs der Übertragung von Signalen von dem ersten Mobiltelefon MFG1 zu dem zweiten Mobiltelefon MFG2 entsprechend der Darstellung von Figur 2 soll zunächst schematisch der Aufbau des Mobiltelefons MFG1 erläutert werden. Das Mobiltelefon MFG1 hat zum Bereitstellen eines Musiksignals eine Musikerzeugungseinrichtung MEE, die eine Wiedergabeeinrichtung MPP umfasst. Die Wiedergabeeinrichtung kann beispielsweise als Software realisiert sein und einen so genannten "MP3-Player" darstellen, der in der Lage ist, Dateien bzw. Musikdateien gemäß dem MP3-Format wiederzugeben, um daraus ein Musiksignal MS zu erhalten. Die Musikerzeugungseinrichtung bzw. die Wiedergabeeinrichtung sind mit einem Speicher SPE verbunden, in dem ein oder mehrere Musikdateien, hier die Dateien MD1 und MD2 vorgesehen sind. Bei den Dateien MD1 und MD2 handelt es sich um Dateien, die gemäß dem MP3-Format codiert sind und jeweils eine Information bezüglich eines Musikstücks bzw. Lieds enthalten. Das bedeutet, zum Wiedergeben beispielsweise des in der Datei MD1 enthaltenen Musikstücks muss die Datei MD1 in den MP3-Player MPP geladen werden, so dass dieser die MP3-codierte Information der Datei MD1 decodiert, um daraus das Musiksignal MS zu erhalten. Es sei bemerkt, dass im vorliegenden Fall die Speichereinrichtung SPE als nichtflüchtiger Speicher im Mobiltelefon MFG1 vorgesehen ist. Zur Auswahl, welches Lied insbesondere beim Durchführen eines Telefongesprächs beispielsweise mit dem Benutzer des zweiten Mobiltelefons MFG2 auf Seiten des Mobiltelefons MFG1 zu einem erfassten Sprachsignal gemischt werden soll, ist eine Auswahleinrichtung AWE an dem Mobiltelefon MFG1 vorgesehen, die in Form der Anzeigeeinrichtung DSP1 und der Tastatur TAS1 realisiert ist. Wie es in Figur 1 zu sehen ist, ist auf der Anzeigeeinrichtung DSP1 eine einfache Menüstruktur angezeigt, bei der ein Benutzer die Auswahl angeboten bekommt, zwischen einem Lied 1 und einem Lied 2 auszuwählen, das schließlich einem Sprachsignal beigemischt werden soll, um es an einen Empfänger zu verteilen. Beispielsweise kann durch Drücken der Pfeiltasten der Tastatur TAS1 der schwarze Punkt abwechselnd auf die Auswahlflächen AW1 und AW2 verschoben werden, wobei das Lied als ausgewählt gilt, bei dem sich der schwarze Punkt befindet (hier das Lied 2, das in der Datei MD2 enthalten ist).

Entsprechend kann durch die das Notensymbol enthaltende Taste von einem Benutzer des Mobiltelefons MFG1 entschieden werden, ob überhaupt ein Musiksignal erzeugt und einem Sprachsignal während eines Telefongesprächs beigemischt werden soll. Durch abwechselndes Drücken der Taste mit dem Notensymbol kann die Option ein- oder ausgeschaltet werden. Die eingeschaltete Option erkennt man, indem das Notensymbol rechts unten in der Anzeigeeinrichtung DSP1 eingeblendet ist (wie es im Fall von Figur 1 zu erkennen ist).

Das Mobiltelefon MFG1 hat ferner eine Spracherfassungseinrichtung in der Form eines Mikrofons MIK, das dafür eingerichtet ist, akustische Signale bzw. Sprachsignale von einem Benutzer des Mobiltelefons MFG1 während eines Telefongesprächs zu erfassen. Das bzw. die erfassten Sprachsignale SS werden dann zusammen mit dem Musiksignal MS einem Mischer MI zugeführt, der die Signale zusammenmischt, um ein kombiniertes Signal KS zu erhalten. Dieses kombinierte Signal KS wird dann einer Codiereinrichtung bzw. einem Codierer COD zugeleitet, der in Form eines Sprachcodierers nach dem AMR-NB-Format ausgebildet ist. Das aus dem Codierer COD herauskommende codierte Signal CS wird schließlich dem Funkmodul FM1 zugeleitet, das das codierte Signal CS über die Antenne ANT1 und die Mobilfunkverbindung MFB1 zur Basisstation BS1 überträgt, welche das Signal über das Mobilfunknetz MFN bzw. dessen zweite Basisstation BS2 und die Mobilfunkverbindung MFB2 zu dem zweiten Mobiltelefon MFG2 überträgt. Die Übertragung bzw. Übertragungsrichtung des Signals (CS) von dem ersten Mobiltelefon MFG1 zu dem zweiten Mobiltelefon MFG2 ist in der Figur durch die jeweils vergrößerten Pfeilspitzen in Richtung der Basisstation BS1 bzw. der Antenne ANT2 veranschaulicht.

Nun soll im Folgenden der Aufbau des Mobiltelefons MFG2 zum Empfangen und Verarbeiten des von dem Mobiltelefon MFG1 gesendeten codierten Signals CS schematisch erläutert werden.

Das von dem Mobiltelefon MFG1 gesendete codierte Signal wird auf Seiten des Mobiltelefons MFG2 über die Antenne ANT2 von dem Funkmodul FM2 empfangen und zu einem Decodierer bzw. einer Decodiereinrichtung DEC weitergeleitet. Bei dem Decodierer handelt es sich dabei um einen Sprach-Decodierer, der (entsprechend dem Codierer COD) nach dem AMR NB-Format arbeitet. Das von dem Decodierer DEC decodierte Signal DS wird schließlich einer Verarbeitungseinrichtung VAE zugeführt, die dafür eingerichtet ist, ein akustisches Signal AS zu erzeugen, mit dem ein Lautsprecher LSP angesteuert werden kann, um ein akustisches Signal bzw. Audiosignal auszugeben, das sowohl das Sprachsignal als auch Musiksignal enthält, welches auf Seiten des ersten Mobiltelefons MFG1 kombiniert bzw. gemischt wurde. Schließlich gibt der Lautsprecher LSP sein Audiosignal aus, damit der Benutzer des Mobiltelefons MFG2 den Benutzer des Mobiltelefons MFG1 hören und mit ihm kommunizieren kann.

Das Mobiltelefon MFG1 kann ferner eine Kamera KA aufweisen, die beispielsweise derart eingerichtet ist, ein oder mehrere Bilder eines Benutzer zu erfassen, die dann beispielsweise mit dem Sprachsignal und Musiksignal gemischt werden können, und dann nach Codieren des gemischten Signals an das zweite Mobiltelefon MFG2 im Rahmen einer Telefonkonferenz übertragen werden können.

Es sei dabei erwähnt, dass nicht nur das Mobiltelefon MFG1, sondern auch das Mobiltelefon MFG2 entsprechende Einrichtungen zum Erfassen eines Sprachsignals bzw. Erzeugen eines Musiksignals und Mischen bzw. Codieren der Signale umfassen kann. Entsprechend kann auch die Anzeigeeinrichtung DSP2 bzw. die Tastatur TAS2 dafür verwendet werden, die Option des Beimischens von Musik bzw. das Auswählen von Musik durchzuführen.

Entsprechend kann auch das Mobiltelefon MFG1 wie das Mobiltelefon MFG2 Einrichtungen zum Empfangen und Decodieren von codierten kombinierten bzw. gemischten Signalen aufweisen, um auch diesbezügliche gemischte bzw. kombinierte Audiosignale ausgeben zu können. Es ist dabei auch möglich, dass beide Mobiltelefone MFG1 und MFG2 identisch ausgebildet sind.

Es sei nun auf Figur 2 verwiesen, anhand der nun der Ablauf zum Aufbauen bzw. Durchführen eines Telefongesprächs beispielsweise anhand der in Figur 1 gezeigten Telekommunikationsanordnung gemäß einer Ausführungsform der Erfindung dargestellt werden soll.

In Schritt S10 wird zunächst eine Kommunikationsverbindung bzw. Sprachverbindung von dem ersten Mobiltelefon MFG1 über das Mobilfunknetz MFN zu dem zweiten Mobiltelefon MFG2 aufgebaut. Dazu kann der Benutzer des Mobiltelefons MFG1 beispielsweise eine bestimmte Taste der Tastatur TAS1 drücken, durch die die Steuereinrichtung STE veranlasst wird, dem Funkmodul FM1 anzuweisen, die Sprachverbindung aufzubauen. Während des Aufbauens der Sprachverbindung bzw. auch noch bei Bestehen der Sprachverbindung kann von dem Benutzer des Mobiltelefons MFG1 festgelegt werden, ob ein Musiksignal (als Begleitmusik) seinem Sprachsignal beigemischt werden soll oder nicht. Ferner kann in Schritt S20 die Musik bzw. das Musikstück festgelegt werden, das beigemischt werden soll (das Vorgehen hierzu wurde bereits bezüglich Figur 1 näher erläutert). Es sei bemerkt, dass auch vor dem Aufbauen einer Sprachverbindung die Auswahl einer Begleitmusik entsprechend Schritt S20 von dem Benutzer des Mobiltelefons MFG1 vorgenommen werden kann.

Im vorliegenden Fall wurde von dem Benutzer des Mobiltelefons MFG1 entschieden, dass das Lied 2 (vgl. Figur 1) als Musik bzw. Musiksignal beigemischt werden soll. Somit wird nach Aufbauen einer Sprachverbindung zu dem Mobiltelefon MFG2 bei dem Mobiltelefon MFG1 von dem Mikrofon MIK die Sprache bzw. die gesprochenen Worte des Benutzers des Mobiltelefons MFG1 in Schritt S30 erfasst. Ferner wird von der Musikerzeugungseinrichtung MEE ein Musiksignal (nach Decodieren einer Musikdatei MD2) entsprechend der zuvor getroffenen Auswahl des Benutzers in Schritt S35 erzeugt. Das erzeugte Musiksignal wird dann im Schritt S40 mit dem erfassten Sprachsignal des Benutzers (in dem Mischer MI) zu einem kombinierten Signal KS gemischt. In Schritt S50 wird das kombinierte Signal KS von der Codiereinrichtung bzw. dem Codierer COD codiert und dem Funkmodul FM1 übergeben. Das Funkmodul FM1 überträgt dann in Schritt S60 das codierte Signal über das Mobilfunknetz MFN zu dem Empfänger, d. h. dem Mobiltelefon MFG2. Die wesentlichen Schritte bzw. die zur Durchführung dieser Schritte verwendeten Komponenten auf Seiten des Senders (dem Mobiltelefon MFG1) sind nochmals in grafisch aufbereiteter Form in Figur 3 dargestellt.

Von dem Mobiltelefon MFG2 wird das übertragene Signal in Schritt S70 empfangen, von der Decodiereinrichtung DEC decodiert, durch die Verarbeitungseinrichtung VAE verarbeitet und schließlich von dem Lautsprecher LSP ausgegeben. Das bedeutet, der Benutzer des Mobiltelefons MFG2 hört die Sprache bzw. die Worte des Benutzers des Mobiltelefons MFG1 und zusätzlich im Hintergrund die von dem Benutzer des Mobiltelefons MFG1 ausgewählte Musik. Die wesentlichen Schritte bzw. die zur Durchführung dieser Schritte verwendeten Komponenten auf Seiten des Empfängers (dem Mobiltelefon MFG2) sind nochmals separat in Figur 4 dargestellt.

Auf die oben beschriebene Weise kann somit "online" Musik von dem Benutzer des Mobiltelefons MFG1 an den Benutzer des Mobiltelefons MFG2 kostengünstig verteilt werden.

## Patentansprüche

1. Verfahren zu Übertragen von Signalen (CS) mittels eines Kommunikationsendgeräts (MFG1), mit folgenden Schritten:
• Erfassen (S30) eines Sprachsignals (SS) durch ein Mikrofon (MIK) des Kommunikationsendgeräts (MFG1);
• Bereitstellen (S35) eines Musiksignals (MS) in dem Kommunikationsendgerät (MFG1);
• Mischen (S40) des Sprachsignals und des Musiksignals in dem Kommunikationsendgerät, um ein kombiniertes Signal (KS) zu erhalten;
• Codieren (S50) des kombinierten Signals, um ein codiertes Signal (CS) zu erhalten;
• Übertragen des codierten Signals an einen Empfänger (MFG2).

2. Verfahren nach Anspruch 1,
bei dem vor dem Erfassen des Sprachsignals eine Kommunikationsverbindung von dem Kommunikationsendgerät zu dem Empfänger aufgebaut wird (S10).

3. Verfahren nach einem der Ansprüche 1 oder 2,
bei dem das Musiksignal (MS) durch Wiedergeben einer Datei (MD1, MD2) bereitgestellt wird, die eine Information bezüglich des Musiksignals enthält.

4. Verfahren nach Anspruch 3,
bei dem die Information der Datei decodiert (S35) wird, um das Musiksignal zu erhalten.

5. Verfahren nach Anspruch 3 oder 4,
bei dem die Datei eine Datei nach dem MP3-, MP3PRO, AAC-, OGG-, RA-, WMA- oder WAV-Format ist.

6. Verfahren nach einem der Ansprüche 1 bis 5,
bei dem das Musiksignal (MS) ein Lied umfasst, das von einem Benutzer auswählbar ist.

7. Verfahren nach einem der Ansprüche 1 bis 6,
bei dem das kombinierte Signal (KS) von einem Sprachcodierer (COD), insbesondere gemäß dem AMR NB-Format codiert wird.

8. Verfahren nach einem der Ansprüche 1 bis 7,
bei dem zusätzlich zu dem Sprachsignal ein Videosignal erfasst wird, das mit dem Musiksignal und dem Sprachsignal zu dem kombinierten Signal gemischt wird.

9. Verfahren nach Anspruch 8,
bei dem das kombinierte Signal mittels eines kombinierten Audio/Videocodierers codiert wird, um das codierte Signal zu erhalten.

10. Verfahren nach einem der Ansprüche 1 bis 9,
bei dem das codierte Signal mittels einer drahtgebundenen und/oder drahtlosen Verbindung (MFB1, MFB2) zu dem Empfänger übertragen wird.

11. Verfahren nach Anspruch 10,
bei dem die drahtlose Funkverbindung als eine Mobilfunkverbindung (MFB1, MFB2) ausgebildet ist, die insbesondere gemäß dem GSM- oder UMTS-Standard arbeitet.

12. Verfahren nach einem der Ansprüche 1 bis 11,
bei dem der Empfänger (MFG2) das empfangene codierte Signal decodiert und wiedergibt.

13. Kommunikationsendgerät, insbesondere zum Durchführen eines Verfahren gemäß den Ansprüchen 1 bis 12, mit folgenden Merkmalen:
• einem Mikrofon (MIK) zum Erfassen eines Sprachsignals (SS);
• einer Musikerzeugungseinrichtung (MEE) zum Erzeugen eines Musiksignals (MS);
• einem Mischer (MI) zum Mischen des Sprachsignals und des Musiksignals, um ein kombiniertes Signal (KS) zu erhalten;
• einem Codierer (COD) zum Codieren des kombinierten Signals, um ein codiertes Signal (CS) zu erhalten;
• einer Kommunikationseinrichtung (FM1) zum Übertragen des codierten Signals an einen Empfänger (MFG2).

14. Kommunikationsendgerät nach Anspruch 13,
das eine Steuereinrichtung (STE) aufweist, durch die vor dem Erfassen des Sprachsignals das Aufbauen einer Kommunikationsverbindung zu dem Empfänger veranlasst wird.

15. Kommunikationsendgerät nach einem der Ansprüche 13 oder 14,
bei dem die Musikerzeugungseinrichtung (MEE) eine Wiedergabeeinrichtung (MPP) zum Wiedergeben einer Datei umfasst, die eine Information bezüglich des Musiksignals enthält.

16. Kommunikationsendgerät nach Anspruch 15,
bei dem die Wiedergabeeinrichtung (MPP) die Information der Datei decodiert, um das Musiksignal (MS) zu erhalten.

17. Kommunikationsendgerät nach Anspruch 15 oder 16,
bei dem die Datei eine Datei nach dem MP3-, MP3PRO-, AAC, OGG-, WMA-, RA- oder WAV-Format ist.

18. Kommunikationsendgerät nach einem der Ansprüche 13 bis 17,
das eine Auswahleinrichtung (AWE; TAS1, DSP1) umfasst, mittels der ein bestimmtes Lied auswählbar ist, dessen Musiksignal von der Musikerzeugungseinrichtung zu erzeugen ist.

19. Kommunikationsendgerät nach einem der Ansprüche 13 bis 18,
bei dem der Codierer (COD) einen Sprachcodierer, insbesondere gemäß dem AMR NB-Format umfasst.

20. Kommunikationsendgerät nach einem der Ansprüche 13 bis 19,
das zusätzlich eine Kamera zum Erfassen eines Videosignals aufweist, das der Mischer (MI) mit dem Musiksignal und Sprachsignal zu dem kombinierten Signal zusammenmischt.

21. Kommunikationsendgerät nach Anspruch 20,
bei dem der Codierer einen kombinierten Audio/Video-Codierer umfasst, um das codierte Signal (CS) zu erhalten.

22. Kommunikationsendgerät nach einem der Ansprüche 13 bis 21,
bei dem die Kommunikationseinrichtung dafür eingerichtet ist, das codierte Signal über eine drahtgebundene und/oder drahtlose Verbindung (MFB1, MFB2) zu dem Empfänger (MFG2) zu übertragen.

23. Kommunikationsendgerät nach Anspruch 22,
bei dem das Kommunikationsendgerät ein Mobilfunkmodul zum Aufbauen einer Mobilfunkverbindung aufweist, die insbesondere gemäß dem GSM- oder UMTS-Standard ausgebildet ist.

24. Kommunikationsendgerät nach einem der Ansprüche 13 bis 23,
das als ein drahtgebundenes Telefon, ein Mobilfunkgerät, ein Mobiltelefon (MFG1) oder ein tragbarer Computer mit Funkmodul ausgebildet ist.
